(19) Europäisches Patentamt
European Patent Office
Office européen des brevets

(11) **EP 4 000 985 A1**

(12) **EUROPÄISCHE PATENTANMELDUNG**

(43) Veröffentlichungstag:
**25.05.2022 Patentblatt 2022/21**

(21) Anmeldenummer: **21207896.8**

(22) Anmeldetag: **12.11.2021**

(51) Internationale Patentklassifikation (IPC):
**B60L 3/00** (2019.01)    **B60L 15/20** (2006.01)

(52) Gemeinsame Patentklassifikation (CPC):
**B60L 3/0046; B60L 15/20;** B60L 2200/26;
B60L 2240/429; B60L 2240/549

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **18.11.2020 DE 102020214496**

(71) Anmelder: **Siemens Mobility GmbH
81739 München (DE)**

(72) Erfinder: **Hassler, Stefan
91281 Kirchenthumbach, OT Neuzirkendorf (DE)**

(54) **FAHRZEUG UND VERFAHREN ZU DESSEN BETRIEB**

(57) Die Erfindung bezieht sich unter anderem auf ein Fahrzeug (10) mit einem Gleichspannungszwischenkreis (50), zumindest einem an den Gleichspannungszwischenkreis (50) angeschlossenen Antriebsmotor (60), einer den Antriebsmotor (60) ansteuernden Motorsteuereinrichtung (100) und zumindest einer an den Gleichspannungszwischenkreis (50) angeschlossenen elektrischen Speichereinrichtung (110). Erfindungsgemäß ist vorgesehen, dass eine Leistungsvorgabeeinrichtung (LVGE) vorhanden ist, die der Motorsteuereinrichtung (100) einen die maximale Motorleistung angebenden Leistungsbegrenzungswert (PW) übermittelt, wobei die Leistungsvorgabeeinrichtung (LVGE) eine Leistungserhöhungseinrichtung (LEE) umfasst, die nach jedem Rücksetzen als Vorgabewert (VW) jeweils einen Startwert (SW) erzeugt, der kleiner als ein vorgegebener Maximalleistungswert (Pmax) ist, und den Vorgabewert (VW) nachfolgend bis maximal auf den Maximalleistungswert (Pmax) erhöht, solange eine vorgegebene motoristleistungsbezogene Erhöhungsbedingung (EB) erfüllt ist und gleichzeitig der Speicherstrom (Iist) betragsmäßig einen vorgegebenen Maximalstromwert (Imax) unterschreitet, und die Leistungsvorgabeeinrichtung (LVGE) den Vorgabewert (VW) oder einen damit gebildeten modifizierten Vorgabewert (VW') als den die maximale Motorleistung angebenden Leistungsbegrenzungswert (PW) zu der Motorsteuereinrichtung (100) übermittelt, und die Motorsteuereinrichtung (100) derart ausgebildet ist, dass sie die Motorleistung unter Berücksichtigung des Leistungsbegrenzungswerts (PW) auf einen tatsächlichen Motorleistungswert begrenzt.

FIG 2

EP 4 000 985 A1

**Beschreibung**

Die Erfindung bezieht sich auf ein Fahrzeug, das mit einem Gleichspannungszwischenkreis, zumindest einem an den Gleichspannungszwischenkreis angeschlossenen Antriebsmotor, einer den Antriebsmotor ansteuernden Motorsteuereinrichtung und zumindest einer an den Gleichspannungszwischenkreis angeschlossenen elektrischen Speichereinrichtung ausgestattet ist.

Fahrzeuge dieser Art sind beispielsweise in Form von Schienenfahrzeugen im Bereich der Eisenbahntechnik bekannt. Die Speichereinrichtung der bekannten Schienenfahrzeuge kann im Antriebsbetrieb des Antriebsmotors zur Bereitstellung elektrischer Energie herangezogen werden und im Bremsbetrieb des Antriebsmotors zur Speicherung der freiwerdenden Bremsenergie dienen.

Im Falle einer überhöhten Leistungsaufnahme oder- abgabe seitens des Antriebsmotors aufgrund einer toleranzbedingten Abweichung des Steuerverhaltens der Motorsteuereinrichtung von einem gewünschten Sollverhalten besteht die Gefahr einer zu hohen Leistungsentnahme oder -einspeisung aus bzw. in den Gleichspannungszwischenkreis, die durch die daran angeschlossene Speichereinrichtung nicht mehr kompensiert werden kann, beispielsweise weil die nötigen Lade- oder Entladeströme in der Speichereinrichtung einen vorgegebenen Maximalstromwert überschreiten würden; eine solche Situation kann zu einem unerwünschten Auslösen von Schutzeinrichtungen führen, die der Speichereinrichtung vorgeordnet sind; letzteres Szenario kann wiederum zu einer für den Fahrbetrieb im Streckennetz insgesamt unerfreulichen Außerbetriebsetzung des betroffenen Fahrzeugs führen.

Der Erfindung liegt die Aufgabe zugrunde, Fahrzeuge der beschriebenen Art dahingehend weiterzuentwickeln, dass bei diesen eine überhöhte Leistungsaufnahme oder -abgabe seitens des Antriebsmotors, insbesondere aufgrund einer toleranzbedingten Abweichung des Steuerverhaltens der Motorsteuereinrichtung von einem gewünschten Sollverhalten, verhindert oder zumindest die Wahrscheinlichkeit einer solchen überhöhten Leistungsaufnahme oder -abgabe reduziert ist.

Diese Aufgabe wird erfindungsgemäß durch ein Fahrzeug mit den Merkmalen gemäß Patentanspruch 1 gelöst. Vorteilhafte Ausgestaltungen des erfindungsgemäßen Fahrzeugs sind in Unteransprüchen angegeben.

Danach ist erfindungsgemäß vorgesehen, dass eine Leistungsvorgabeeinrichtung vorhanden ist, die der Motorsteuereinrichtung einen die maximale Motorleistung angebenden Leistungsbegrenzungswert übermittelt, wobei die Leistungsvorgabeeinrichtung eine Leistungserhöhungseinrichtung umfasst, die nach jedem Rücksetzen als Vorgabewert jeweils einen Startwert erzeugt, der kleiner als ein vorgegebener Maximalleistungswert ist, und den Vorgabewert nachfolgend bis maximal auf den Maximalleistungswert erhöht, solange eine vorgegebene motoristleistungsbezogene Erhöhungsbedingung erfüllt ist und gleichzeitig der Speicherstrom betragsmäßig einen vorgegebenen Maximalstromwert unterschreitet, und die Leistungsvorgabeeinrichtung den Vorgabewert oder einen damit gebildeten modifizierten Vorgabewert als den die maximale Motorleistung angebenden Leistungsbegrenzungswert zu der Motorsteuereinrichtung übermittelt, und die Motorsteuereinrichtung derart ausgebildet ist, dass sie die Motorleistung unter Berücksichtigung des Leistungsbegrenzungswerts auf einen tatsächlichen Motorleistungswert begrenzt.

Ein wesentlicher Vorteil des erfindungsgemäßen Fahrzeugs ist darin zu sehen, dass es dessen erfindungsgemäß vorgesehene Leistungsvorgabeeinrichtung vermeidet, der Motorsteuereinrichtung einen zu hohen Leistungsbegrenzungswert vorzugeben. Das erfindungsgemäße Hochfahren des Vorgabewerts gewährleistet nämlich, dass auch im Falle einer Toleranz der Motorsteuereinrichtung derart, dass die tatsächliche Motorleistung (Traktionsleistung im Falle eines Antriebsbetriebs oder die rückgespeiste Bremsleistung im Bremsbetrieb) den übermittelten Leistungsbegrenzungswert überschreitet, keine Überlastung der Speichereinrichtung auftreten kann; die Erfindung beruht auf dem Gedanken, dass durch ein Erhöhen des Vorgabewerts ausgehend von einem Startwert, der kleiner als der Maximalleistungswert ist, und einem Beobachten des Speicherstroms während des Hochfahrens verhindert werden kann, dass der Speicherstrom betragsmäßig einen für die Speichereinrichtung vorgegebenen Maximalstromwert überschreiten wird.

Vorteilhaft ist es, wenn die Leistungserhöhungseinrichtung derart ausgebildet ist, dass sie die motoristleistungsbezogene Erhöhungsbedingung als erfüllt ansieht, wenn der tatsächliche Motoristleistungswert größer als der jeweils aktuelle Leistungsbegrenzungswert ist. Ein zu hoher Motoristleistungswert signalisiert der Leistungserhöhungseinrichtung, dass fahrzeugseitig bzw. fahrerseitig eine hohe Leistung abgefragt bzw. beim Bremsen zur Verfügung gestellt wird, sodass, sofern der Vorgabewert noch kleiner als der Maximalleistungswert ist und der Speicherstrom betragsmäßig den Maximalstromwert noch unterschreitet, eine Vorgabeerhöhung möglich und für den Fahrbetrieb vorteilhaft ist.

Alternativ oder zusätzlich kann in vorteilhafter Weise vorgesehen sein, dass die Leistungserhöhungseinrichtung derart ausgebildet ist, dass sie die motoristleistungsbezogene Erhöhungsbedingung als erfüllt ansieht, wenn der Betrag der Abweichung zwischen der tatsächlichen Motoristleistung und dem jeweils aktuellen Leistungsbegrenzungswert kleiner als eine vorgegebene Schwelle ist. Auch letztgenannte Schwellenbetrachtung signalisiert, wenn fahrzeugseitig bzw. fahrerseitig eine hohe Leistung abgefragt bzw. beim Bremsen zur Verfügung gestellt wird, sodass, sofern der Vorgabewert noch kleiner als der Maximalleistungswert ist und der Speicherstrom betragsmäßig den Maximalstromwert noch unterschreitet, eine Vorgabeerhöhung möglich und für den Fahrbetrieb vorteilhaft ist.

Die Leistungserhöhungseinrichtung weist vorzugsweise ein Rampenglied auf, das den jeweils aktuellen Vorgabewert gemäß einer vorgegebenen Rampe erhöht und den jeweils erhöhten Vorgabewert ausgangsseitig ausgibt, wenn an einem Freigabeeingang des Rampenglieds ein Freigabesignal anliegt, und andernfalls, also im Falle eines Fehlens des Freigabesignals am Freigabeeingang, den Vorgabewert ausgangsseitig unverändert lässt.

Das Rampenglied weist vorzugsweise einen Rücksetzeingang auf, der den ausgangsseitig ausgegebenen Vorgabewert jeweils auf den Startwert zurücksetzt, wenn an dem Rücksetzeingang ein Rücksetzsignal anliegt.

Dem Rücksetzeingang ist vorzugsweise eine Vergleichseinrichtung vorgeordnet, die das Rücksetzsignal erzeugt, sobald die tatsächliche Motoristleistung den jeweils aktuellen Leistungsbegrenzungswert unterschreitet.

Alternativ oder zusätzlich kann dem Rücksetzeingang in vorteilhafter Weise eine Vergleichseinrichtung vorgeordnet sein, die das Rücksetzsignal erzeugt, sobald die tatsächliche Motoristleistung den jeweils aktuellen Leistungsbegrenzungswert über ein vorgegebenes Maß hinaus unterschreitet.

Alternativ oder zusätzlich kann dem Rücksetzeingang in vorteilhafter Weise eine Vergleichseinrichtung vorgeordnet sein, die das Rücksetzsignal erzeugt, sobald die tatsächliche Motoristleistung den Startwert unterschreitet.

Das Rampenglied weist vorzugsweise auf: einen Integrator, der nach einem jeden Rücksetzen eine vorgegebene Konstante über der Zeit bis zum Erreichen des Maximalleistungswerts integriert, und einen nachgeordneten Leistungsaddierer, der das vom Integrator ausgegebene Integrationsergebnis mit positivem Vorzeichen, einen durch die Differenz zwischen dem Maximalwert und dem Startwert definierten Margenwert mit negativem Vorzeichen und den Maximalleistungswert unter Bildung des Vorgabewerts addiert.

Die Leistungsvorgabeeinrichtung ist vorzugsweise mit einer Maximalleistungsbestimmungseinrichtung ausgestattet, die anhand eines die Speichereinrichtung beschreibenden Speichermodells, eines vom jeweiligen Ladezustand der Speichereinrichtung abhängigen Leerlaufspannungswerts und des Maximalstromwerts den Maximalleistungswert berechnet.

Vorzugsweise wird der Maximalleistungswert wie folgt errechnet:

$$Pmax = |Usoc \cdot Imax| + Ri \cdot Imax^2$$

wobei Pmax den Maximalleistungswert, Imax den Maximalstromwert, Ri den Innenwiderstand der Speichereinrichtung und Usoc den Ladezustand der Speichereinrichtung in Form des Leerlaufspannungswerts beschreibt. Der Innenwiderstand Ri und der Ladezustand bilden dabei Modellparameter eines die Speichereinrichtung beschreibenden Speichermodells. Der Ladezustand kann in vorteilhafter Weise durch Beobachten und Integrieren der in die Speichereinrichtung hineinfließenden Ladeströme und der aus der Speichereinrichtung herausfließenden Entladeströme ermittelt werden und der Leerlaufspannungswert Usoc kann dann unter Heranziehung des ermittelten Ladezustands und einer die Speichereinrichtung beschreibenden Ladekurve ermittelt bzw. errechnet werden; dabei können zusätzliche Einflüsse wie beispielsweise die Abhängigkeit des Innenwiderstands von der Temperatur und dem Ladezustand oder die Abhängigkeit des Leerlaufspannungswerts von der Temperatur berücksichtigt werden.

Durch das Ermitteln des Maximalleistungswerts auf der Basis eines modellierten bzw. errechneten Leerlaufspannungswerts anstelle eines Messwerts, der die an der Speichereinrichtung tatsächliche abfallende Spannung angibt, kann in vorteilhafter Weise eine Rückkopplung vermieden werden, die bei manchen Widerstandswerten des Innenwiderstandes zu einem instabilen Gesamtsystemverhalten führen könnte.

Auch ist es vorteilhaft, wenn die Leistungsvorgabeeinrichtung eine Reduktionseinrichtung aufweist, die den in die Reduktionseinrichtung eingespeisten Vorgabewert als Leistungsbegrenzungswert ausgibt, solange der Speicherstrom betragsmäßig den vorgegebenen Maximalstromwert nicht überschreitet, und vom Vorgabewert einen Korrekturwert abzieht, wenn der Speicherstrom betragsmäßig den vorgegebenen Maximalstromwert überschreitet. Eine solche Reduktionseinrichtung bietet den Vorteil eines Feinabgleichs hinsichtlich des Speicherstroms und stellt stets sicher, dass der Maximalstromwert nicht überschritten wird.

Vorteilhaft ist es, wenn die Reduktionseinrichtung eine Spannungsermittlungseinrichtung umfasst, die den vom jeweiligen Ladezustand der Speichereinrichtung abhängigen Leerlaufspannungswert und den Betrag des Produkts aus Speicherstrom und Innenwiderstand der Speichereinrichtung addiert und die Summe als Spannungsabfallwert ausgibt. Ein Vorteil der Berücksichtigung des in der beschriebenen Weise unter Einbezug des Speicherstroms ermittelten Spannungsabfallwerts besteht darin, dass der Spannungsabfall am Innenwiderstand separat von der Leerlaufspannungswert berücksichtigt wird.

Die Reduktionseinrichtung weist vorzugsweise eine Multiplikationseinrichtung auf, die eingangsseitig mit dem Spannungsabfallwert der Spannungsermittlungseinrichtung sowie einem Ausgangswert einer Regeleinrichtung beaufschlagt ist und das gebildete Produkt als eine Regelgröße ausgibt, deren Betrag den Korrekturwert bildet.

Die Regeleinrichtung umfasst vorzugsweise einen PI-Regler oder ist durch einen solchen gebildet, der als Eingangsgröße mit dem Maximalstromwert abzüglich des Betrages des Speicherstroms beaufschlagt ist, sofern der Betrag größer als Null ist oder Null beträgt und andernfalls zurückgesetzt wird.

Die Maximalleistungsbestimmungseinrichtung ist vorzugsweise der Leistungserhöhungseinrichtung, die den Maximalleistungswert der Maximalleistungsbestimmungseinrichtung weiterverarbeitet, vorgeordnet.

Die Leistungserhöhungseinrichtung ist vorzugsweise der Reduktionseinrichtung vorgeordnet und speist den Vorgabewert vorzugsweise in die Reduktionseinrichtung ein.

Die Reduktionseinrichtung leitet den von der Leistungserhöhungseinrichtung eingespeisten Vorgabewert vorzugsweise als Leistungsbegrenzungswert zu der Motorsteuereinrichtung weiter, solange der Speicherstrom betragsmäßig den vorgegebenen Maximalstromwert nicht überschreitet, und zieht vom Vorgabewert den Korrekturwert ab und übermittelt den reduzierten Vorgabewert als Leistungsbegrenzungswert zu der Motorsteuereinrichtung, wenn der Speicherstrom betragsmäßig den vorgegebenen Maximalstromwert überschreitet.

Die Erfindung bezieht sich darüber hinaus auf ein Verfahren zum Betreiben eines Fahrzeugs, das mit einem Gleichspannungszwischenkreis, zumindest einem an den Gleichspannungszwischenkreis angeschlossenen Antriebsmotor, einer den Antriebsmotor ansteuernden Motorsteuereinrichtung und zumindest einer an den Gleichspannungszwischenkreis angeschlossenen elektrischen Speichereinrichtung ausgestattet ist.

Erfindungsgemäß ist bezüglich des Verfahrens vorgesehen, dass mit einer Leistungserhöhungseinrichtung nach jedem Rücksetzen als Vorgabewert jeweils ein Startwert erzeugt wird, der kleiner als ein vorgegebener Maximalleistungswert ist, und der Vorgabewert nachfolgend bis maximal auf den Maximalleistungswert erhöht wird, solange eine vorgegebene motoristleistungsbezogene Erhöhungsbedingung erfüllt ist und gleichzeitig der Speicherstrom betragsmäßig einen vorgegebenen Maximalstromwert unterschreitet, der Vorgabewert oder ein damit gebildeter modifizierter Vorgabewert als ein die maximale Motorleistung angebender Leistungsbegrenzungswert zu der Motorsteuereinrichtung übermittelt wird, und die Motorsteuereinrichtung die Motorleistung unter Berücksichtigung des Leistungsbegrenzungswerts auf einen tatsächlichen Motorleistungswert begrenzt.

Bezüglich der Vorteile und vorteilhafter Ausgestaltungen des erfindungsgemäßen Verfahrens sei auf die obigen Ausführungen im Zusammenhang mit dem erfindungsgemäßen Fahrzeug und dessen vorteilhafter Ausgestaltungen verwiesen.

Die Erfindung bezieht sich darüber hinaus auf eine Leistungsvorgabeeinrichtung zum Betreiben eines Fahrzeugs, das mit einem Gleichspannungszwischenkreis, zumindest einem an den Gleichspannungszwischenkreis angeschlossenen Antriebsmotor, einer den Antriebsmotor ansteuernden Motorsteuereinrichtung und zumindest einer an den Gleichspannungszwischenkreis angeschlossenen elektrischen Speichereinrichtung ausgestattet ist.

Erfindungsgemäß ist bezüglich der Leistungsvorgabeeinrichtung vorgesehen, dass diese eine Leistungserhöhungseinrichtung umfasst, die nach jedem Rücksetzen als Vorgabewert jeweils einen Startwert erzeugt, der kleiner als ein vorgegebener Maximalleistungswert ist, und den Vorgabewert nachfolgend bis maximal auf den Maximalleistungswert erhöht, solange eine vorgegebene motoristleistungsbezogene Erhöhungsbedingung erfüllt ist und gleichzeitig der Speicherstrom betragsmäßig einen vorgegebenen Maximalstromwert unterschreitet, und die Leistungsvorgabeeinrichtung den Vorgabewert oder einen damit gebildeten modifizierten Vorgabewert als einen die maximale Motorleistung angebenden Leistungsbegrenzungswert ausgibt, insbesondere zu der Motorsteuereinrichtung übermittelt. Bezüglich der Vorteile und vorteilhafter Ausgestaltungen der erfindungsgemäßen Leistungsvorgabeeinrichtung sei auf die obigen Ausführungen im Zusammenhang mit dem erfindungsgemäßen Fahrzeug und dessen vorteilhafter Ausgestaltungen verwiesen.

Die Erfindung wird nachfolgend anhand von Ausführungsbeispielen näher erläutert; dabei zeigen beispielhaft

Fig. 1     ein Ausführungsbeispiel für ein erfindungsgemäßes Schienenfahrzeug, das mit einer Leistungsvorgabeeinrichtung ausgestattet ist,

Fig. 2-4     Ausführungsbeispiele für erfindungsgemäße Leistungsvorgabeeinrichtungen näher im Detail und

Fig. 5-6     weitere Ausführungsbeispiele für erfindungsgemäße Schienenfahrzeuge, die mit Leistungsvorgabeeinrichtungen ausgestattet sind.

In den Figuren werden für identische oder vergleichbare Komponenten stets dieselben Bezugszeichen verwendet.

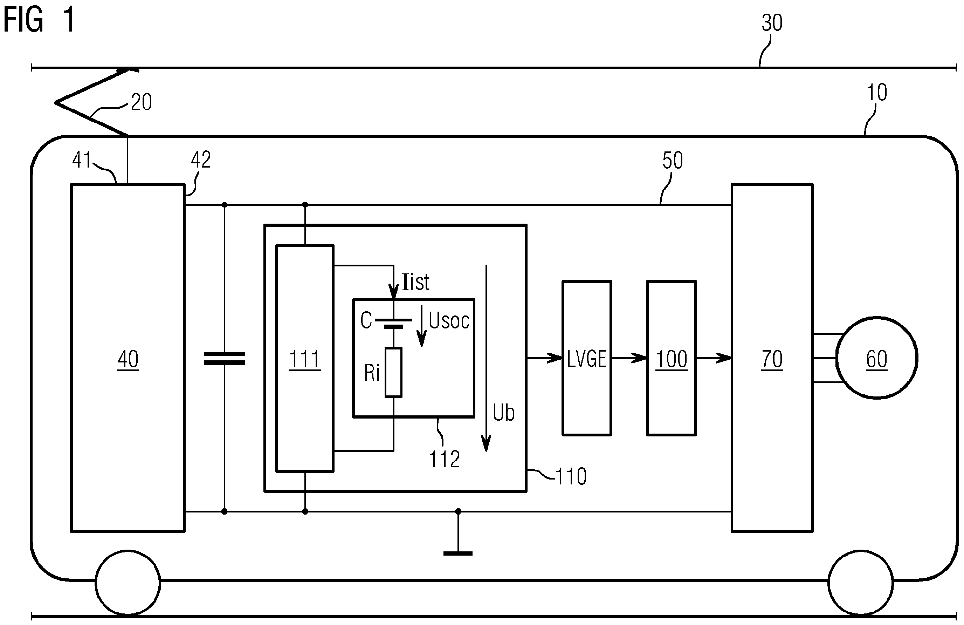

Die Figur 1 zeigt ein Ausführungsbeispiel für ein Schienenfahrzeug 10, das über einen Stromabnehmer 20 mit einem externen Energieversorgungsnetz 30 elektrisch verbunden werden kann, um beispielsweise das Schienenfahrzeug 10 mit der Energie des externen Energieversorgungsnetzes 30 zu betreiben.

An den Stromabnehmer 20 ist eine erste Anschlussseite 41 eines Umrichters 40 angeschlossen, bei dem es sich beispielsweise um einen Vierquadrantensteller handeln kann. Eine zweite Anschlussseite 42 des Umrichters 40 steht mit einem Gleichspannungszwischenkreis 50 in Verbindung, der unter anderem zum Betrieb eines Antriebsmotors 60 des Schienenfahrzeugs 10 dient. Bei dem Ausführungsbeispiel gemäß Figur 1 steht der Antriebsmotor 60 über einen weiteren, in der Figur 1 rechten Umrichter 70 mit dem Gleichspannungszwischenkreis 50 in Verbindung.

Zur Ansteuerung des Antriebsmotors 60 dient eine Motorsteuereinrichtung 100, die vorzugsweise räumlich im Bereich des rechten Umrichters 70 und des Antriebsmotors 60 angeordnet ist. Bei dem Ausführungsbeispiel gemäß Figur 1 steuert die Motorsteuereinrichtung 100 den Antriebsmotor mittelbar an, indem sie den rechten Umrichter 70 ansteuert bzw. beeinflusst. Alternativ kann die Motorsteuereinrichtung 100 bei geeigneter Ausgestaltung den Antriebsmotor 60 auch unmittelbar ansteuern.

Beispielsweise für den Fall, dass das Schienenfahrzeug 10 gemäß Figur 1 in einem Streckenabschnitt betrieben werden soll, bei dem kein externes Energieversorgungsnetz 30 zur Verfügung steht, weist das Schienenfahrzeug 10 eine Speichereinrichtung 110 auf. Die Speichereinrichtung 110 umfasst einen Gleichspannungswandler 111 in Form eines DC/DC-Stellers und einen elektrischen Energiespeicher in Form einer Batterie 112, an der eine Batteriespannung Ub anliegt und die einen Innenwiderstand Ri und eine Kapazität C aufweist. Mit der Energie der Speichereinrichtung 110 kann der Antriebsmotor 60 betrieben werden; auch ist es möglich, im Motorbremsbetrieb des Antriebsmotors 60 die Bremsenergie in der Speichereinrichtung 110 zu speichern.

Außerdem ist eine Leistungsvorgabeeinrichtung LVGE vorhanden, die der Motorsteuereinrichtung 100 einen die maximale Motorleistung angebenden Leistungsbegrenzungswert PW übermittelt. Die Motorsteuereinrichtung 100 ist wiederum derart ausgebildet, dass sie die Motorleistung unter Berücksichtigung des Leistungsbegrenzungswerts PW auf einen tatsächlichen Motorleistungswert begrenzt oder beispielsweise durch eine entsprechende Regelung zu begrenzen versucht.

In den nachfolgenden Figuren werden Ausführungsbeispiele für bevorzugte Ausgestaltungen der Leistungsvorgabeeinrichtung LVGE näher beispielhaft erläutert.

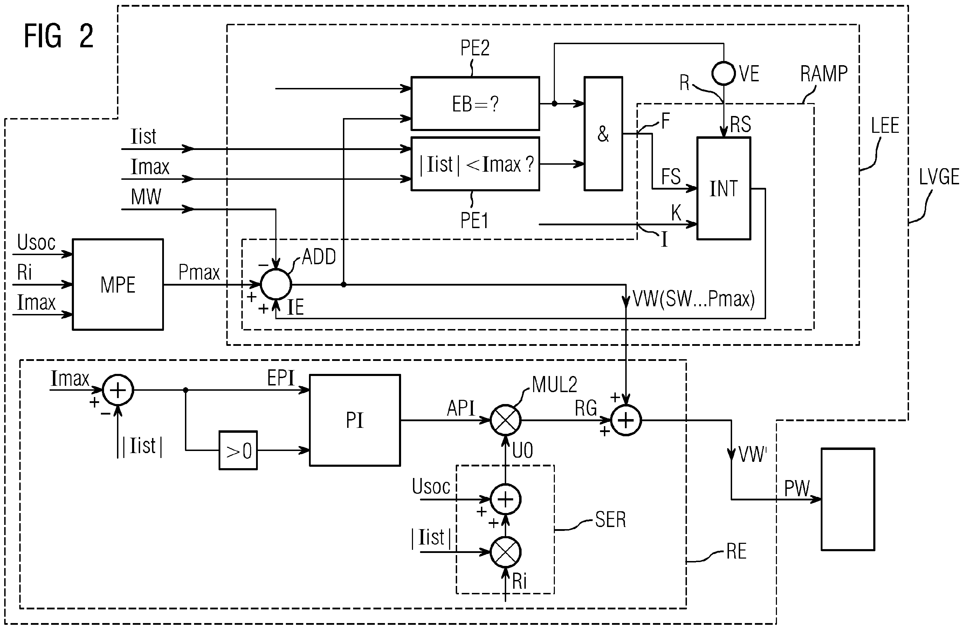

Bei dem Ausführungsbeispiel gemäß der Figur 2 weist die Leistungsvorgabeeinrichtung LVGE eine Reduktionseinrichtung RE auf, die einen in die Reduktionseinrichtung RE eingespeisten Vorgabewert VW als Leistungsbegrenzungswert PW weiterleitet, solange der Speicherstrom Iist betragsmäßig einen vorgegebenen Maximalstromwert Imax nicht überschreitet, und vom Vorgabewert VW einen Korrekturwert, der betragsmäßig durch eine Regelgröße RG gebildet wird, abzieht und den reduzierten bzw. bzw. durch Reduktion modifizierten Vorgabewert VW' als Leistungsbegrenzungswert PW ausgibt, wenn der Speicherstrom Iist betragsmäßig den vorgegebenen Maximalstromwert Imax überschreitet.

Die Leistungsvorgabeeinrichtung LVGE weist außerdem eine der Reduktionseinrichtung RE vorgeordnete Maximalleistungsbestimmungseinrichtung MPE auf, die anhand eines die Speichereinrichtung 110 beschreibenden Speichermodells, eines vom jeweiligen Ladezustand der Speichereinrichtung 110 abhängigen Leerlaufspannungswerts Usoc und des Maximalstromwerts Imax einen Maximalleistungswert Pmax berechnet, vorzugsweise wie folgt:

$$ \text{Pmax} = |\text{Usoc} \cdot \text{Imax}| + \text{Ri} \cdot \text{Imax}^2 $$

Der Innenwiderstand Ri und der Ladezustand in Form des Leerlaufspannungswerts Usoc können als Modellparameter eines die Speichereinrichtung 110 beschreibenden Speichermodells angesehen werden. Der Ladezustand kann in vorteilhafter Weise durch Beobachten und Integrieren der in die Speichereinrichtung hineinfließenden Ladeströme und der aus der Speichereinrichtung herausfließenden Entladeströme ermittelt werden und der Leerlaufspannungswert Usoc kann dann unter Heranziehung des ermittelten Ladezustands und einer die Speichereinrichtung beschreibenden Ladekurve ermittelt bzw. errechnet werden; dabei können zusätzliche Einflüsse wie beispielsweise die Abhängigkeit des Innenwiderstands von der Temperatur und dem Ladezustand oder die Abhängigkeit des Leerlaufspannungswerts von der Temperatur berücksichtigt werden.

Durch das Ermitteln des Maximalleistungswerts auf der Basis eines modellierten bzw. errechneten Leerlaufspannungswerts Usoc anstelle eines Messwerts, der die an der Speichereinrichtung tatsächliche abfallende Spannung Ub angibt, kann in vorteilhafter Weise eine Rückkopplung vermieden werden, die bei manchen Widerstandswerten des Innenwiderstandes zu einem instabilen Gesamtsystemverhalten führen könnte.

Die Reduktionseinrichtung RE umfasst eine Spannungsermittlungseinrichtung SER, die den vom jeweiligen Ladezustand der Speichereinrichtung 110 abhängigen Leerlaufspannungswert Usoc und den Betrag des Produkts aus Speicherstrom Iist und Innenwiderstand Ri der Speichereinrichtung 110 addiert und die Summe als Spannungsabfallwert U0 ausgibt.

Die Reduktionseinrichtung RE weist außerdem eine Multiplikationseinrichtung MUL2 auf, die eingangsseitig mit dem Spannungsabfallwert U0 der Spannungsermittlungseinrichtung SER sowie einem Ausgangswert API einer Regeleinrichtung PI beaufschlagt ist und das gebildete Produkt als die Regelgröße RG ausgibt.

Die Regeleinrichtung PI ist vorzugsweise ein PI-Regler, der als Eingangsgröße EPI mit dem Maximalstromwert Imax abzüglich des Betrages des Speicherstroms Iist beaufschlagt ist, sofern der Betrag größer als Null ist oder Null beträgt und andernfalls zurückgesetzt wird.

Bei dem Ausführungsbeispiel gemäß Figur 2 ist zwischen die Maximalleistungsbestimmungseinrichtung MPE und die Reduktionseinrichtung RE eine Leistungserhöhungseinrichtung LEE geschaltet, die nach jedem Rücksetzen als Vorgabewert VW jeweils einen Startwert SW erzeugt, der kleiner als ein vorgegebener Maximalleistungswert Pmax

ist, und den Vorgabewert VW nachfolgend bis maximal auf den Maximalleistungswert Pmax erhöht, solange eine vorgegebene motoristleistungsbezogene Erhöhungsbedingung EB erfüllt ist und gleichzeitig - was durch ein UND-GLIED "&" geprüft wird - der Speicherstrom Iist betragsmäßig einen vorgegebenen Maximalstromwert Imax unterschreitet.

Die Prüfung, ob der Speicherstrom Iist betragsmäßig den vorgegebenen Maximalstromwert Imax unterschreitet, erfolgt bei dem Ausführungsbeispiel gemäß Figur 2 in einer ersten Prüfeinrichtung PE1. Die Prüfung, ob die Erhöhungsbedingung EB erfüllt ist, erfolgt bei dem Ausführungsbeispiel gemäß Figur 2 in einer zweiten Prüfeinrichtung PE2.

Die zweite Prüfeinrichtung PE2 der Leistungserhöhungseinrichtung LEE ist vorzugsweise derart ausgebildet, dass sie die motoristleistungsbezogene Erhöhungsbedingung EB als erfüllt ansieht, wenn der tatsächliche Motoristleistungswert Pist größer als der jeweils aktuelle Leistungsbegrenzungswert PW ist oder diesem entspricht.

Vorteilhaft ist es, wenn die Prüfeinrichtung PE2 der Leistungserhöhungseinrichtung LEE die motoristleistungsbezogene Erhöhungsbedingung EB auch dann als erfüllt ansieht, wenn der Betrag der Abweichung zwischen der tatsächlichen Motoristleistung Pist und dem jeweils aktuellen Leistungsbegrenzungswert PW kleiner als eine vorgegebene Schwelle ist.

Bei dem Ausführungsbeispiel gemäß der Figur 2 weist die Leistungserhöhungseinrichtung LEE ein Rampenglied RAMP auf, das den jeweils aktuellen Vorgabewert VW gemäß einer vorgegebenen Rampe erhöht und den jeweils erhöhten Vorgabewert VW ausgangsseitig ausgibt, wenn an einem Freigabeeingang F des Rampenglieds RAMP ein Freigabesignal FS anliegt, und andernfalls, also im Falle eines Fehlens des Freigabesignals FS am Freigabeeingang F, den Vorgabewert VW ausgangsseitig unverändert lässt.

Das Rampenglied RAMP weist außerdem einen Rücksetzeingang R auf, der den ausgangsseitig ausgegebenen Vorgabewert VW jeweils auf den Startwert SW zurücksetzt, wenn an dem Rücksetzeingang R ein Rücksetzsignal RS anliegt.

Dem Rücksetzeingang R kann eine Vergleichseinrichtung VE vorgeordnet sein, die das Rücksetzsignal RS erzeugt.

Die Vergleichseinrichtung VE kann das Rücksetzsignal RS erzeugen, sobald die tatsächliche Motoristleistung Pist den jeweils aktuellen Leistungsbegrenzungswert PW unterschreitet.

Alternativ oder zusätzlich kann die Vergleichseinrichtung VE das Rücksetzsignal RS erzeugen, sobald die tatsächliche Motoristleistung Pist den jeweils aktuellen Leistungsbegrenzungswert PW über ein vorgegebenes Maß hinaus unterschreitet.

Auch kann die Vergleichseinrichtung VE alternativ das Rücksetzsignal RS erzeugen, sobald die tatsächliche Motoristleistung Pist den Startwert SW unterschreitet.

Je nach der Ausgestaltung der zweiten Prüfeinrichtung PE2 und der Prüfung der motoristleistungsbezogenen Erhöhungsbedingung EB kann die Vergleichseinrichtung VE beispielsweise durch einen Inverter gebildet sein, der zwischen den Ausgang der zweiten Prüfeinrichtung PE2 und den Rücksetzeingang R geschaltet ist.

Bei dem Ausführungsbeispiel gemäß Figur 41 weist das Rampenglied RAMP einen Integrator INT auf, der nach einem jeden Rücksetzen eine vorgegebene Konstante K über der Zeit bis zum Erreichen des Maximalleistungswerts Pmax integriert. Nachgeordnet ist ein Leistungsaddierer ADD, der das vom Integrator INT ausgegebene Integrationsergebnis IE mit positivem Vorzeichen, einen durch die Differenz zwischen dem Maximalwert und dem Startwert SW definierten Margenwert MW mit negativem Vorzeichen und den Maximalleistungswert Pmax unter Bildung des Vorgabewerts VW addiert.

Bei dem Ausführungsbeispiel gemäß der Figur 2 übermittelt die Leistungsvorgabeeinrichtung LVGE den Vorgabewert VW der Leistungserhöhungseinrichtung LEE nicht unmittelbar an die Motorsteuereinrichtung 100, sondern erst nach einer etwaigen Modifizierung, konkret Reduktion, durch die Reduktionseinrichtung RE, wie dies oben beschrieben wurde.

Die oben beschriebene Regelung des Vorgabewerts VW gilt sowohl für das Entladen der Speichereinrichtung 110 im Antriebsbetrieb als auch für das Entladen, wenn der Antriebsmotor 60 als Motorbremse betrieben wird; denn die unterschiedlichen Betriebsarten schlagen sich lediglich im Vorzeichen des Speicherstromes Iist, das entsprechend berücksichtigt wird, nieder.

Durch die oben beschriebene Regelung des Vorgabewerts VW kann in vorteilhafter Weise vermieden werden, dass etwaige Arbeitstoleranzen in der Motorsteuereinrichtung 100, beispielsweise solche, die zu einem zu hohen Motorstrom im Antriebsmotor 60 und damit in Folge auch zu einem zu hohen Speicherstrom Iist führen, eine Überlastung der Speichereinrichtung 110 zur Folge haben oder zu einem Auslösen vorgeordneter Schutzeinrichtungen führen.

Die Leistungsvorgabeeinrichtung LVGE kann durch eine einzige Recheneinrichtung, die zur Ausführung der oben beschriebenen Verfahrensschritte programmiert ist, gebildet sein. Alternativ können Teile der Leistungsvorgabeeinrichtung LVGE auf zwei oder mehr Recheneinrichtungen aufgeteilt sein. Zum Beispiel können die Maximalleistungsbestimmungseinrichtung MPE und die Leistungserhöhungseinrichtung LEE in einer Recheneinrichtung implementiert sein und die Reduktionseinrichtung RE in einer anderen Recheneinrichtung.

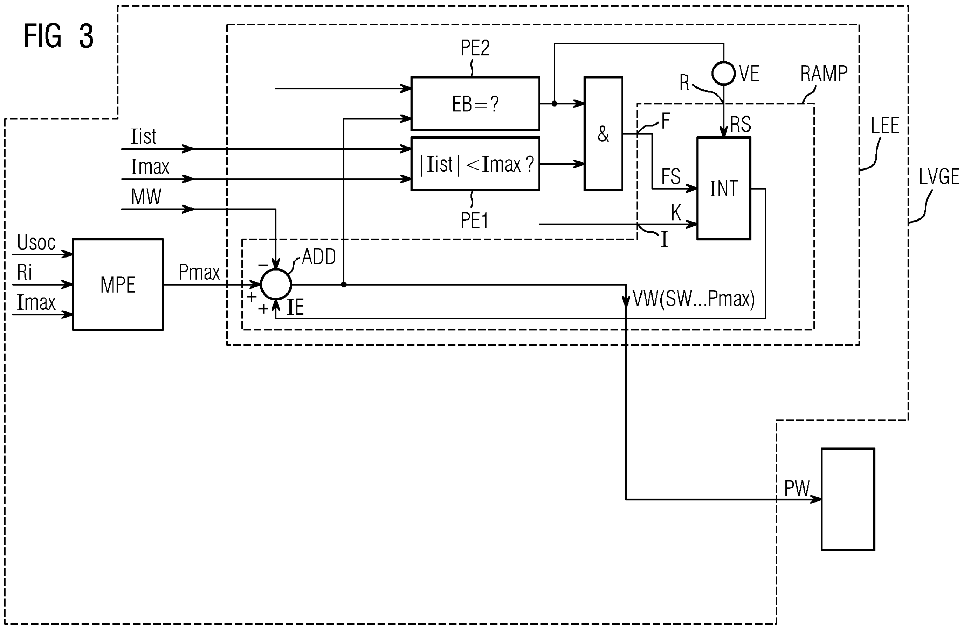

Die Figur 3 zeigt eine Ausführungsvariante des Ausführungsbeispiels gemäß Figur 2. Bei der Ausführungsvariante Figur 3 fehlt die Reduktionseinrichtung RE. Bei dem Ausführungsbeispiel gemäß der Figur 3 übermittelt die Leistungsvorgabeeinrichtung LVGE den Vorgabewert VW der Leistungserhöhungseinrichtung LEE unmittelbar an die Motorsteuereinrichtung 100.

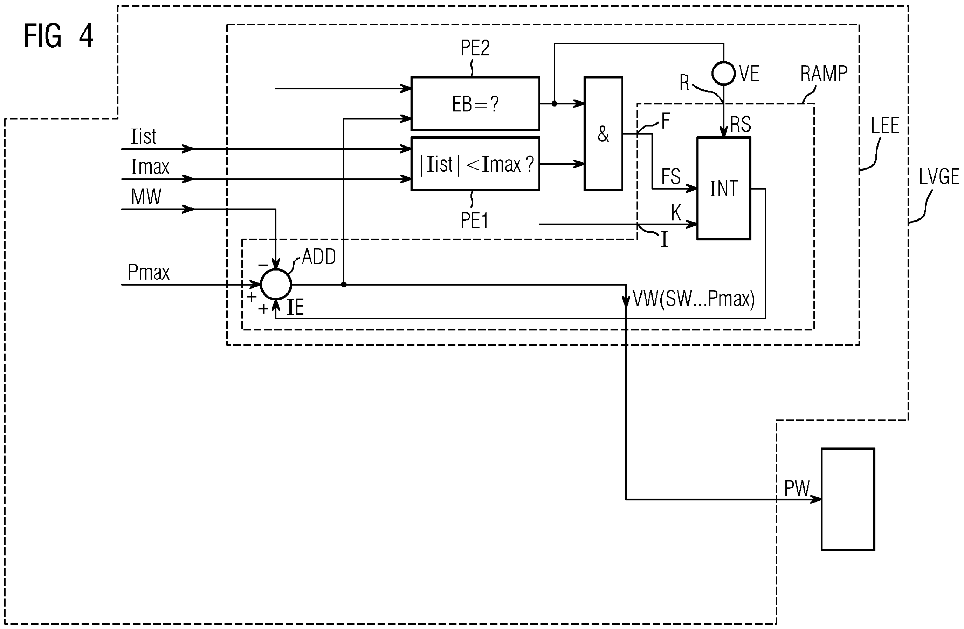

Die Figur 4 zeigt eine Ausführungsvariante des Ausführungsbeispiels gemäß Figur 3. Bei der Ausführungsvariante Figur 4 fehlt außerdem die Maximalleistungsbestimmungseinrichtung MPE. Die Leistungserhöhungseinrichtung LEE wird mit einem fest vorgegebenen Maximalleistungswert Pmax gespeist.

Bei den obigen Ausführungsbeispielen kann die Leistungsvorgabeeinrichtung LVGE eine von der Speichereinrichtung 110 und der Motorsteuereinrichtung 100 räumlich getrennte Baueinheit sein, wie dies schematisch in der Figur 1 gezeigt ist, und durch eine oder mehrere separate, entsprechend programmierte Recheneinrichtungen gebildet sein.

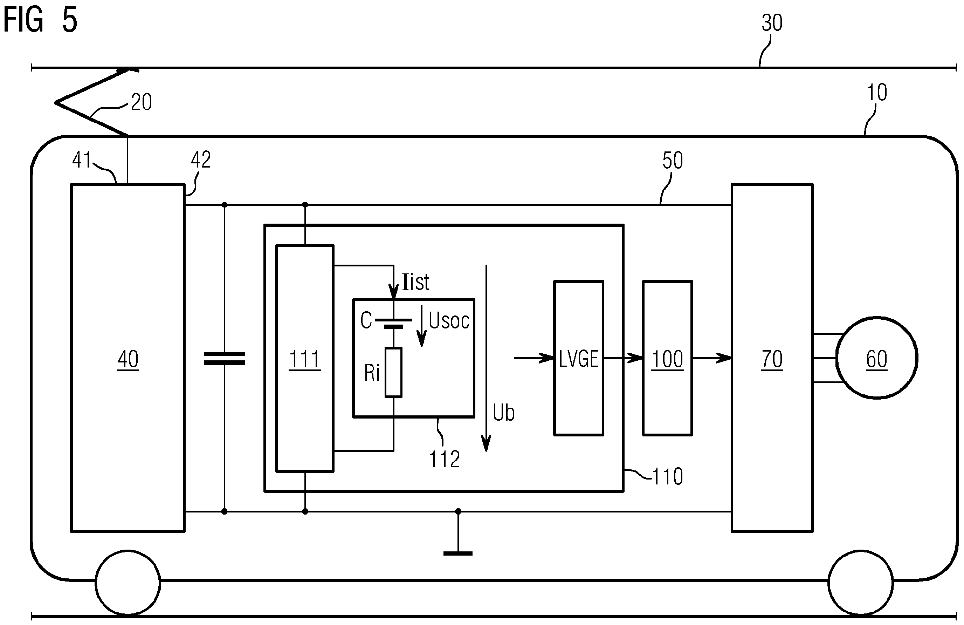

Alternativ kann die Leistungsvorgabeeinrichtung LVGE in der Speichereinrichtung 110 als speichereinrichtungseigene Komponente integriert sein, wie in der Figur 5 gezeigt ist. Diese Variante ist besonders vorteilhaft, weil in der Speichereinrichtung 110 die von der Maximalleistungsbestimmungseinrichtung MPE und der Leistungserhöhungseinrichtung LEE zu verarbeitenden Daten direkt vorliegen.

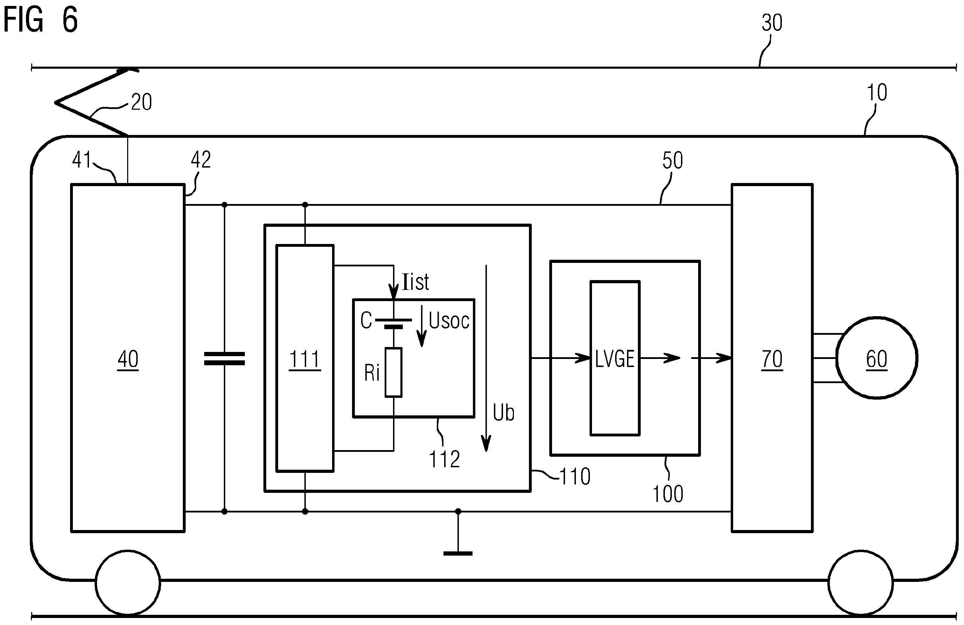

Auch ist es möglich, die Leistungsvorgabeeinrichtung LVGE in der Motorsteuereinrichtung 100 als motorsteuereinrichtungseigene Komponente zu integrieren, wie in der Figur 6 gezeigt ist; bei dieser Variante werden die von der Maximalleistungsbestimmungseinrichtung MPE zu verarbeitenden Daten von der Speichereinrichtung 110 zu der Leistungsvorgabeeinrichtung LVGE übertragen, beispielsweise über ein Datenbussystem.

Darüber hinaus ist es möglich, Teile der Leistungsvorgabeeinrichtung LVGE - vorzugsweise zumindest die Maximalleistungsbestimmungseinrichtung MPE - in der Speichereinrichtung 110 als speichereinrichtungseigene Komponenten zu integrieren und andere Teile - vorzugsweise zumindest die Reduktionseinrichtung RE - in der Motorsteuereinrichtung 100 als motorsteuereinrichtungseigene Komponenten zu integrieren. Diese Variante ist vorteilhaft, weil die von der Maximalleistungsbestimmungseinrichtung MPE zu verarbeitenden Daten in der Speichereinrichtung 110 vorliegen; die Reduktionseinrichtung RE vor Ort in der Motorsteuereinrichtung 100 kann schnell eingreifen, um den Feinabgleich durchzuführen.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Bezugszeichenliste

| | |
|---|---|
| 10 | Schienenfahrzeug |
| 20 | Stromabnehmer |
| 30 | Energieversorgungsnetz |
| 40 | Umrichter |
| 41 | erste Anschlussseite |
| 42 | zweite Anschlussseite |
| 50 | Gleichspannungszwischenkreis |
| 60 | Antriebsmotor |
| 70 | Umrichter |
| 100 | Motorsteuereinrichtung |
| 110 | Speichereinrichtung |
| 111 | Gleichspannungswandler |
| 112 | elektrischer Energiespeicher |

| | |
|---|---|
| ADD | Leistungsaddierer |
| API | Ausgangswert |
| C | Kapazität |
| EB | Erhöhungsbedingung |
| EPI | Eingangsgröße |
| F | Freigabeeingang |
| FS | Freigabesignal |
| IE | Integrationsergebnis |
| Iist | Speicherstrom |
| Imax | Maximalstromwert |
| INT | Integrator |
| K | Konstante |

LEE    Leistungserhöhungseinrichtung
LVGE    Leistungsvorgabeeinrichtung
MPE    Maximalleistungsbestimmungseinrichtung
MUL2    Multiplikationseinrichtung
MW    Margenwert
PE1    erste Prüfeinrichtung
PE2    zweite Prüfeinrichtung
PI    Regeleinrichtung
Pist    Motoristleistungswert
Pmax    Maximalleistungswert
PW    Leistungsbegrenzungswert
R    Rücksetzeingang
RAMP    Rampenglied
RE    Reduktionseinrichtung
RG    Regelgröße
Ri    Innenwiderstand
RS    Rücksetzsignal
SER    Spannungsermittlungseinrichtung
SW    Startwert
U0    Spannungsabfallwert
Ub    Batteriespannung
Usoc    Leerlaufspannungswert
VE    Vergleichseinrichtung
VW    Vorgabewert
VW'    modifizierter Vorgabewert
&    UND-GLIED

**Patentansprüche**

1. Fahrzeug (10) mit einem Gleichspannungszwischenkreis (50), zumindest einem an den Gleichspannungszwischenkreis (50) angeschlossenen Antriebsmotor (60), einer den Antriebsmotor (60) ansteuernden Motorsteuereinrichtung (100) und zumindest einer an den Gleichspannungszwischenkreis (50) angeschlossenen elektrischen Speichereinrichtung (110),
**dadurch gekennzeichnet, dass**

   - eine Leistungsvorgabeeinrichtung (LVGE) vorhanden ist, die der Motorsteuereinrichtung (100) einen die maximale Motorleistung angebenden Leistungsbegrenzungswert (PW) übermittelt,
   - wobei die Leistungsvorgabeeinrichtung (LVGE) eine Leistungserhöhungseinrichtung (LEE) umfasst, die nach jedem Rücksetzen als Vorgabewert (VW) jeweils einen Startwert (SW) erzeugt, der kleiner als ein vorgegebener Maximalleistungswert (Pmax) ist, und den Vorgabewert (VW) nachfolgend bis maximal auf den Maximalleistungswert (Pmax) erhöht, solange eine vorgegebene motoristleistungsbezogene Erhöhungsbedingung (EB) erfüllt ist und gleichzeitig der Speicherstrom (Iist) betragsmäßig einen vorgegebenen Maximalstromwert (Imax) unterschreitet, und
   - die Leistungsvorgabeeinrichtung (LVGE) den Vorgabewert (VW) oder einen damit gebildeten modifizierten Vorgabewert (VW') als den die maximale Motorleistung angebenden Leistungsbegrenzungswert (PW) zu der Motorsteuereinrichtung (100) übermittelt, und
   - die Motorsteuereinrichtung (100) derart ausgebildet ist, dass sie die Motorleistung unter Berücksichtigung des Leistungsbegrenzungswerts (PW) auf einen tatsächlichen Motorleistungswert begrenzt.

2. Fahrzeug (10) nach Anspruch 1,
**dadurch gekennzeichnet, dass** die Leistungserhöhungseinrichtung (LEE) derart ausgebildet ist, dass sie die motoristleistungsbezogene Erhöhungsbedingung (EB) als erfüllt ansieht, wenn der tatsächliche Motoristleistungswert (Pist) größer als der jeweils aktuelle Leistungsbegrenzungswert (PW) ist.

3. Fahrzeug (10) nach einem der voranstehenden Ansprüche,
**dadurch gekennzeichnet, dass** die Leistungserhöhungseinrichtung (LEE) derart ausgebildet ist, dass sie die motoristleistungsbezogene Erhöhungsbedingung (EB) als erfüllt ansieht, wenn der Betrag der Abweichung zwischen der tatsächlichen Motoristleistung (Pist) und dem jeweils aktuellen Leistungsbegrenzungswert (PW) kleiner als eine vorgegebene Schwelle ist.

4. Fahrzeug (10) nach einem der voranstehenden Ansprüche,
**dadurch gekennzeichne**t, dass die Leistungserhöhungseinrichtung (LEE) ein Rampenglied (RAMP) aufweist, das den jeweils aktuellen Vorgabewert (VW) gemäß einer vorgegebenen Rampe erhöht und den jeweils erhöhten Vorgabewert (VW) ausgangsseitig ausgibt, wenn an einem Freigabeeingang (F) des Rampenglieds (RAMP) ein Freigabesignal (FS) anliegt, und andernfalls, also im Falle eines Fehlens des Freigabesignals (FS) am Freigabeeingang (F), den Vorgabewert (VW) ausgangsseitig unverändert lässt.

5. Fahrzeug (10) nach einem der voranstehenden Ansprüche,
**dadurch gekennzeichne**t, dass das Rampenglied (RAMP) einen Rücksetzeingang (R) aufweist, der den ausgangsseitig ausgegebenen Vorgabewert (VW) jeweils auf den Startwert (SW) zurücksetzt, wenn an dem Rücksetzeingang (R) ein Rücksetzsignal (RS) anliegt.

6. Fahrzeug (10) nach einem der voranstehenden Ansprüche,
**dadurch gekennzeichne**t, dass dem Rücksetzeingang (R) eine Vergleichseinrichtung (VE) vorgeordnet ist, die das Rücksetzsignal (RS) erzeugt, sobald die tatsächliche Motoristleistung (Pist) den jeweils aktuellen Leistungsbegrenzungswert (PW) unterschreitet.

7. Fahrzeug (10) nach einem der voranstehenden Ansprüche,
**dadurch gekennzeichne**t, dass dem Rücksetzeingang (R) eine Vergleichseinrichtung (VE) vorgeordnet ist, die das Rücksetzsignal (RS) erzeugt, sobald die tatsächliche Motoristleistung (Pist) den jeweils aktuellen Leistungsbegrenzungswert (PW) über ein vorgegebenes Maß hinaus unterschreitet.

8. Fahrzeug (10) nach einem der voranstehenden Ansprüche,
**dadurch gekennzeichnet, dass** dem Rücksetzeingang (R) eine Vergleichseinrichtung (VE) vorgeordnet ist, die das Rücksetzsignal (RS) erzeugt, sobald die tatsächliche Motoristleistung (Pist) den Startwert (SW) unterschreitet.

9. Fahrzeug (10) nach einem der voranstehenden Ansprüche,
**dadurch gekennzeichne**t, dass das Rampenglied (RAMP) aufweist:

- einen Integrator (INT), der nach einem jeden Rücksetzen eine vorgegebene Konstante (K) über der Zeit bis zum Erreichen des Maximalleistungswerts (Pmax) integriert, und
- einen nachgeordneten Leistungsaddierer (ADD), der das vom Integrator (INT) ausgegebene Integrationsergebnis (IE) mit positivem Vorzeichen, einen durch die Differenz zwischen dem Maximalwert und dem Startwert (SW) definierten Margenwert (MW) mit negativem Vorzeichen und den Maximalleistungswert (Pmax) unter Bildung des Vorgabewerts (VW) addiert.

10. Fahrzeug (10) nach einem der voranstehenden Ansprüche,
**dadurch gekennzeichne**t, dass die Leistungsvorgabeeinrichtung (LVGE) eine Maximalleistungsbestimmungseinrichtung (MPE) aufweist, die anhand eines die Speichereinrichtung (110) beschreibenden Speichermodells, eines vom jeweiligen Ladezustand der Speichereinrichtung (110) abhängigen Leerlaufspannungswerts (Usoc) und des Maximalstromwerts (Imax) den Maximalleistungswert (Pmax) berechnet.

11. Fahrzeug (10) nach einem der voranstehenden Ansprüche,
**dadurch gekennzeichnet, dass** die Leistungsvorgabeeinrichtung (LVGE) eine Reduktionseinrichtung (RE) aufweist, die den in die Reduktionseinrichtung (RE) eingespeisten Vorgabewert (VW) als Leistungsbegrenzungswert (PW) ausgibt, solange der Speicherstrom (Iist) betragsmäßig den vorgegebenen Maximalstromwert (Imax) nicht überschreitet, und vom Vorgabewert (VW) einen Korrekturwert abzieht, wenn der Speicherstrom (Iist) betragsmäßig den vorgegebenen Maximalstromwert (Imax) überschreitet.

12. Fahrzeug (10) nach Anspruch 11,
**dadurch gekennzeichnet, dass**

- die Leistungserhöhungseinrichtung (LEE) der Reduktionseinrichtung (RE) vorgeordnet ist und in die Reduktionseinrichtung (RE) den Vorgabewert (VW) einspeist und
- die Maximalleistungsbestimmungseinrichtung (MPE) der Leistungserhöhungseinrichtung (LEE) vorgeordnet ist und in diese den Maximalleistungswert (Pmax) einspeist.

13. Fahrzeug (10) nach einem der voranstehenden Ansprüche,
**dadurch gekennzeichnet, dass**

- die Reduktionseinrichtung (RE) eine Spannungsermittlungseinrichtung (SER) umfasst, die den vom jeweiligen Ladezustand der Speichereinrichtung (110) abhängigen Leerlaufspannungswert (Usoc) und den Betrag des Produkts aus Speicherstrom (Iist) und Innenwiderstand (Ri) der Speichereinrichtung (110) addiert und die Summe als Spannungsabfallwert (U0) ausgibt, und
- die Reduktionseinrichtung (RE) eine Multiplikationseinrichtung (MUL2) aufweist, die eingangsseitig mit dem Spannungsabfallwert (U0) der Spannungsermittlungseinrichtung (SER) sowie einem Ausgangswert (API) einer Regeleinrichtung (PI) beaufschlagt ist und das gebildete Produkt als eine Regelgröße (RG) ausgibt, deren Betrag den Korrekturwert bildet.

14. Leistungsvorgabeeinrichtung (LVGE) für ein Fahrzeug (10), das mit einem Gleichspannungszwischenkreis (50), zumindest einem an den Gleichspannungszwischenkreis (50) angeschlossenen Antriebsmotor (60), einer den Antriebsmotor (60) ansteuernden Motorsteuereinrichtung (100) und zumindest einer an den Gleichspannungszwischenkreis (50) angeschlossenen elektrischen Speichereinrichtung (110) ausgestattet ist,
**dadurch gekennzeichnet, dass**

- die Leistungsvorgabeeinrichtung (LVGE) eine Leistungserhöhungseinrichtung (LEE) umfasst, die nach jedem Rücksetzen als Vorgabewert (VW) jeweils einen Startwert (SW) erzeugt, der kleiner als ein vorgegebener Maximalleistungswert (Pmax) ist, und den Vorgabewert (VW) nachfolgend bis maximal auf den Maximalleistungswert (Pmax) erhöht, solange eine vorgegebene motoristleistungsbezogene Erhöhungsbedingung (EB) erfüllt ist und gleichzeitig der Speicherstrom (Iist) betragsmäßig einen vorgegebenen Maximalstromwert (Imax) unterschreitet, und
- die Leistungsvorgabeeinrichtung (LVGE) den Vorgabewert (VW) oder einen damit gebildeten modifizierten Vorgabewert (VW') als einen die maximale Motorleistung angebenden Leistungsbegrenzungswert (PW) ausgibt.

15. Verfahren zum Betreiben eines Fahrzeugs (10), das mit einem Gleichspannungszwischenkreis (50), zumindest einem an den Gleichspannungszwischenkreis (50) angeschlossenen Antriebsmotor (60), einer den Antriebsmotor (60) ansteuernden Motorsteuereinrichtung (100) und zumindest einer an den Gleichspannungszwischenkreis (50) angeschlossenen elektrischen Speichereinrichtung (110) ausgestattet ist,
**dadurch gekennzeichnet, dass**

- mit einer Leistungserhöhungseinrichtung (LEE) nach jedem Rücksetzen als Vorgabewert (VW) jeweils ein Startwert (SW) erzeugt wird, der kleiner als ein vorgegebener Maximalleistungswert (Pmax) ist, und der Vorgabewert (VW) nachfolgend bis maximal auf den Maximalleistungswert (Pmax) erhöht wird, solange eine vorgegebene motoristleistungsbezogene Erhöhungsbedingung (EB) erfüllt ist und gleichzeitig der Speicherstrom (Iist) betragsmäßig einen vorgegebenen Maximalstromwert (Imax) unterschreitet,
- der Vorgabewert (VW) oder ein damit gebildeter modifizierter Vorgabewert (VW') als ein die maximale Motorleistung angebender Leistungsbegrenzungswert (PW) zu der Motorsteuereinrichtung (100) übermittelt wird und
- die Motorsteuereinrichtung (100) die Motorleistung unter Berücksichtigung des Leistungsbegrenzungswerts (PW) auf einen tatsächlichen Motorleistungswert begrenzt.

FIG 1

FIG 2

EP 4 000 985 A1

FIG 3

FIG 4

# FIG 5

EP 4 000 985 A1

FIG 6

EP 4 000 985 A1

Europäisches Patentamt
European Patent Office
Office européen des brevets

# EUROPÄISCHER RECHERCHENBERICHT

**Nummer der Anmeldung**

**EP 21 20 7896**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | CN 106 240 400 B (ZHUZHOU CRRC TIMES ELECTRIC CO LTD) 11. Juni 2019 (2019-06-11) * Absatz [0001] – Absatz [0005]; Ansprüche 1-5; Abbildung 1 * ----- | 1-15 | INV. B60L3/00 B60L15/20 |
| A | EP 2 468 562 A1 (MITSUBISHI ELECTRIC CORP [JP]) 27. Juni 2012 (2012-06-27) * Absatz [0001] – Absatz [0015] * * Absatz [0044] – Absatz [0054]; Abbildungen 4, 6, 7 * ----- | 1-15 | |

**RECHERCHIERTE SACHGEBIETE (IPC)**

B60L

Der vorliegende Recherchenbericht wurde für alle Patentansprüche erstellt

| Recherchenort | Abschlußdatum der Recherche | Prüfer |
|---|---|---|
| Den Haag | 23. März 2022 | Utz, Tilman |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 21 20 7896

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

23-03-2022

| Im Recherchenbericht angeführtes Patentdokument | Datum der Veröffentlichung | Mitglied(er) der Patentfamilie | Datum der Veröffentlichung |
|---|---|---|---|
| CN 106240400 B | 11-06-2019 | KEINE | |
| EP 2468562 A1 | 27-06-2012 | CA 2771318 A1 | 24-02-2011 |
| | | CN 102470762 A | 23-05-2012 |
| | | EP 2468562 A1 | 27-06-2012 |
| | | KR 20120037997 A | 20-04-2012 |
| | | KR 20140062167 A | 22-05-2014 |
| | | RU 2012110208 A | 27-09-2013 |
| | | US 2012112669 A1 | 10-05-2012 |
| | | WO 2011021266 A1 | 24-02-2011 |
| | | WO 2011021443 A1 | 24-02-2011 |

Für nähere Einzelheiten zu diesem Anhang : siehe Amtsblatt des Europäischen Patentamts, Nr.12/82